# EUROPEAN PATENT SPECIFICATION

(11) **EP 0 813 813 B1**
(45) Date of publication and mention of the grant of the patent: **02.04.2003**
(21) Application number: 97304312.8
(22) Date of filing: 19.06.1997
(51) Int. Cl.: A21C 9/04

(54) **A method and apparatus for sprinkling food products with powder material**
Verfahren und Vorrichtung zum Bestreuen von Nahrungsmittelprodukten mit einem Pulver
Procédé et appareil pour la saupoudrage de produits alimentaires

(30) Priority: 19.06.1996 JP 18012796
(43) Date of publication of application: 29.12.1997
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP); Hirabayashi, Koichi, Utsunomiya-shi, Tochigi-ken (JP); Usui, Hiroyuki, Utsunomiya-shi, Tochigi-ken (JP)
(74) Representative: Leale, Robin George

(56) References cited:
- DE-A- 3 203 887
- DE-A- 3 426 974
- US-A- 3 070 264
- US-A- 3 186 358

## Description

This invention relates to a method and apparatus for sprinkling food products with powder material such as flour in a food production system where food products move along a conveyor.

Conventionally, a sprinkling apparatus used in bread-production systems is located above a conveyor, and is provided with a hopper for holding powder material such as flour and a sprinkler for sprinkling bread dough on the conveyor with the flour from the hopper. For the best performance of the system the sprinkler must stir the flour in the hopper so that the distribution of the sprinkled flour on the bread dough may be reasonably uniform.

Various sprinkler configurations have been employed for this purpose. The Japanese Patent Office, on February 20, 1980, published a "Gazette of Collected and Widely and Commonly Used Techniques". Pages 67 and 68 disclose two exemplary sprinkler structures. One such sprinkler is provided with two parallel and connected rotating rollers mounted on a bottom opening of the hopper. One of the two rollers is a feeder roller with grooves knurled on its rotating surface, and the other roller is a rotating brush. When the two rollers rotate, the feeder roller stirs the powder material in the hopper. However, the flour tends to stick to the rotating surface of the feeder. The powder material stuck on the feeder is then brushed by the rotating brush. In the other sprinkler disclosed in the Gazette, a bottom portion of the hopper is formed as a net to be rubbed by a brush or plate which is mounted within the hopper in reciprocally rotatable fashion. When the meshed bottom portion of the hopper and the brush or plate are rubbed together the powder material falls out of the hopper.

In the first-mentioned sprinkler disclosed in the Gazette, sometimes the powder material is fine-grained, and tends to set, such as is the case with weak flour, and bridging of the flour can then occur within the hopper so that the flour jams within it. This causes the supply of flour to be insufficient and the flour thus tends to be poorly sprinkled on the bread dough. Additionally, the sticking force causing the flour to stick to the knurled grooves of the feeder may be insufficient to transfer the flour to the rotating brush. Thus, there is a limit to the kinds of powder material that can be used in this type of sprinkler. Further, every brushing by the rotating brush stirs up the powder material, and this causes the working environment to be contaminated.

A problem that arises with the other sprinkler of the Gazette is that the amount of the powder material available to be sprinkled changes rapidly before and after every passage of the brush or plate, and this prevents uniform sprinkling. Thus, the distribution of the powder material on the food product may be of a wave-like disproportionate nature, again without uniform distribution.

It is known from DE 3426974 to provide apparatus for sprinkling a food product with powder material, comprising:
hopper means for holding powder material in a space defined by an inner wall of said hopper means, said hopper means having an exit opening at the bottom thereof;
a rotary member rotatably mounted within said hopper means, said rotary member having a rotation surface provided with recesses for receiving the powder material; and
a narrow passageway provided between said rotation surface of said rotary member and said inner wall of said hopper for pressing the powder material within said hopper means against said rotation surface of said rotary member;
means for wiping the compressed powder material from said rotation surface of said rotary member at said exit opening of said hopper means, and for causing the wiped powder material to exit through said exit opening.

From US-A-3 070 264 is known a dispensing apparatus with movable plates for assuring downward material flow.

The present invention is characterised by a movable plate slidably supported on said inner wall of said hopper means above said narrow passageway, said movable plate being arranged to stir the powder material within said hopper means and to feed the powder material into the said passageway by its sliding movement,
wherein said movable plate has a surface having a plurality of through holes opening on the inner wall of the hopper, or said movable plate has a rough surface, for stirring the powder material so as to break up bridges;
means for conveying a food product, said conveying means having a surface on which the food product may be located; and
said hopper means being located above said conveying means.

The movable plate is arranged to break up bridges of powder material formed on the inner wall of the hopper means, to stir the powder material within the hopper means and to feed the powder material into the narrow passageway by its sliding movement.

The said movable plate may have a plurality of holes on its surface in contact with the inner wall of the hopper means so as to facilitate scraping of powder material from the wall. The lower end region of the movable plate may have a flat surface without any holes. The lower end region of the movable plate acts to push or guide powder material toward the pressing means formed by the said narrow passageway.

Furthermore, the said movable plate may have a rough surface or an area with a plurality of holes for stirring or scraping the powder material.

Viewed from another aspect the invention provides a method of sprinkling a food product with powder material, comprising the steps of:
supplying the powder material into a hopper means provided with an exit opening at the bottom thereof,
introducing the powder material into recesses provided on a rotation surface of a rotating member;
introducing the powder material into a narrow passageway between said rotation surface of said rotary member and said inner wall of said hopper and thereby pressing the powder material within said hopper means against said rotation surface of said rotating member;
wiping the compressed powder material from said rotation surface of said rotating member at said exit opening of said hopper means, thereby causing the wiped powder material to exit through said exit opening; and
characterised by the provision of a movable plate slidably supported on said inner wall of said hopper means above said narrow passageway, said movable plate being arranged to stir the powder material within said hopper means and to feed the powder material into the said passageway by its sliding movement,
wherein said movable plate has a surface having a plurality of through holes opening on the inner wall of the hopper, or said movable plate has a rough surface, for stirring the powder material so as to break up bridges.

Some embodiments of the invention will now be described by way of example and with reference to the accompanying drawings, in which:-
Fig. 1 is a longitudinal sectional view of a sprinkling apparatus showing a drum in a hopper;
Fig. 2 is a side elevation view of the apparatus of Fig. 1, partly broken away to show the interior construction;
Figs. 3 and 4 are longitudinal sectional views of modified forms of the drum shown in Fig. 1;
Fig. 5 is a view similar to Fig. 1 but showing a sprinkling apparatus according to the invention; and
Fig. 6 is a perspective view of a movable plate shown in Fig. 5.

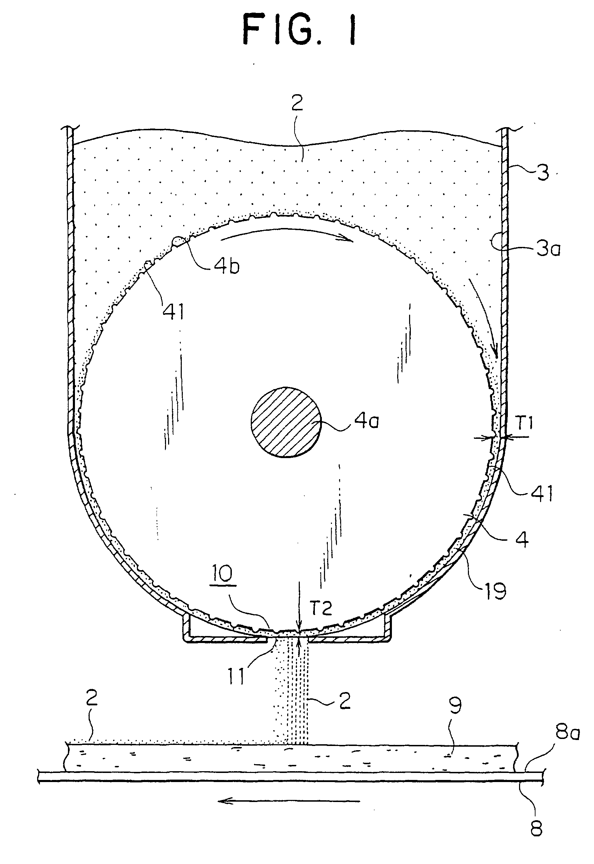

The embodiments shown in Figures 1 to 4 do not form part of the present invention and are included to assist in the understanding thereof.

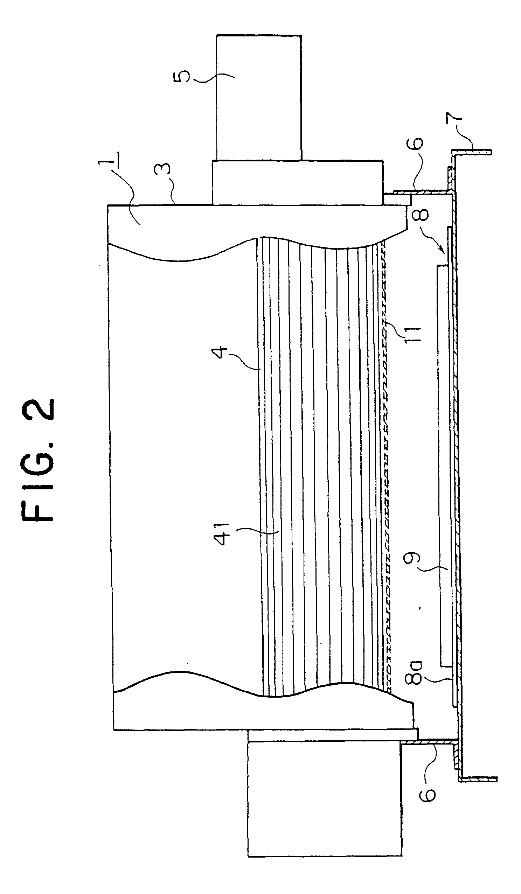

In the embodiments of Figs. 1 and 2, a conveyor 8 is supported on a frame 7. A bread dough sheet 9 rests on the surface 8a of the conveyor 8, which moves in the direction represented by the arrow. The dough sheet 9 passes under a sprinkling apparatus 1 mounted on brackets 6 that are attached to the conveyor frame 7. The sprinkling apparatus 1 comprises a hopper 3 for holding flour 2 and an elongate rotating drum 4 located at the bottom of the hopper. The bottom of the hopper accommodates the drum 4 and thus extends in the axial direction of the drum. The hopper has a discharge opening 10 for discharging the flour 2, at its bottom end.

Attached to the bottom end of the hopper is a wiper 11, arranged to cover the opening 10. The wiper 11 is shaped so that it acts as an exit for the flour 2 in the hopper 3 at the same time as it wipes the flour from the rotating drum 4. The wiper 11 can be fabricated from a wire mesh, or a loosely woven material, or other suitable material. The configuration of the wiper 11 is not limited to a planar or curved shape, but it should be in a form which can wipe the flour 2 held on the drum 4 and drop it onto food material on the conveyor below, as the drum rotates.

As shown in Fig. 2 the drum 4 is elongate, so that it extends over the conveyor 8 and, is made to rotate around a center shaft 4a by a motor 5 drivingly connected to the shaft. In this embodiment the drum 4 rotates in a clockwise direction as seen in Fig. 1. The drum acts as a feeder to feed the flour 2 from the hopper 3 to the opening 10, while simultaneously it acts as a stirrer for stirring the flour in the hopper. A bottom portion of an inner wall 3a of the hopper 3 is curved so as to form a narrow passageway 19 between the inner wall 3a and the rotation surface 4b, of the drum 4, leading to the discharge opening 10. The narrow passageway 19 has predetermined widths. If T₁ is the distance between the hopper inner wall 3a and the drum rotation surface 4b at the entrance of the passageway 19, and T₂ is the distance between the surface 4b and the upper surface of the wiper 11 at the opening 10, the relationship of T₁ and T₂ is T₁>T₂.

The width of the passageway 19 before the opening 10 can be gradually decreased from T₁ to T₂, or the passageway 19 can keep a constant width T₁ until it reaches the opening 10.

The drum 4 has channels 41 along the length of its rotation surface 4b. Each channel 41 has an arc-like cross section.

In operation, the flour 2 in the hopper 3 enters the channels 41 of the drum 4, is carried into the narrow passageway 19 by the rotation of the drum, and is then pressed against the rotation surface 4b of the drum. When the flour is brought by the rotation of the drum to the position where the wiper 11 is provided, the flour is subjected to the wiper action as the drum 4 rotates. The flour is thereby scraped off by the uneven surfaces of the wiper 11, which is a net in this embodiment, as shown in Fig. 2. The wiped off portion of the flour falls from the discharge opening 10 through the gaps in the wiper 11, while the remaining portion thereof is returned into the hopper 3 by the continuous rotation of the drum. The wiped off flour is sprinkled on the dough sheet 9 or the conveyor surface 8a or both, and is thus deposited on the dough. By this action, the flour does not fly about in the surrounding environment, and is uniformly distributed on the dough.

The flour 2 in the hopper 3 is stirred by the rotation of the drum 4 so that it does not form a bridge, and thus it cannot jam in the hopper 3. In this embodiment, the narrow passageway 19 acts as a means for pressing the flour against the rotation surface 4b of the drum 4. It is understood that the pressing means is not limited to the narrow passageway 19, but can be replaced by any other suitable arrangement. In other words the pressing means can be any type of compressor that can press the flour against the rotation surface 4b of the drum 4.

The sprinkling of the flour from the opening 10 can be controlled by adjusting the distance T₂, or by adjusting the rotation speed of the drum 4.

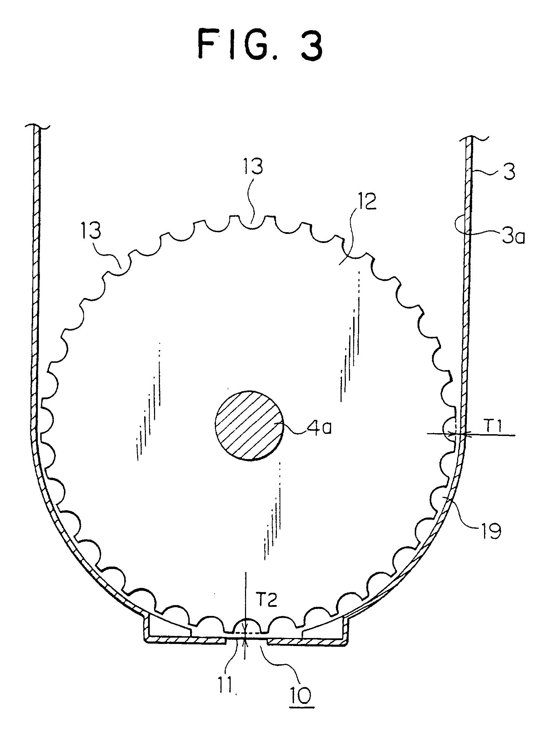

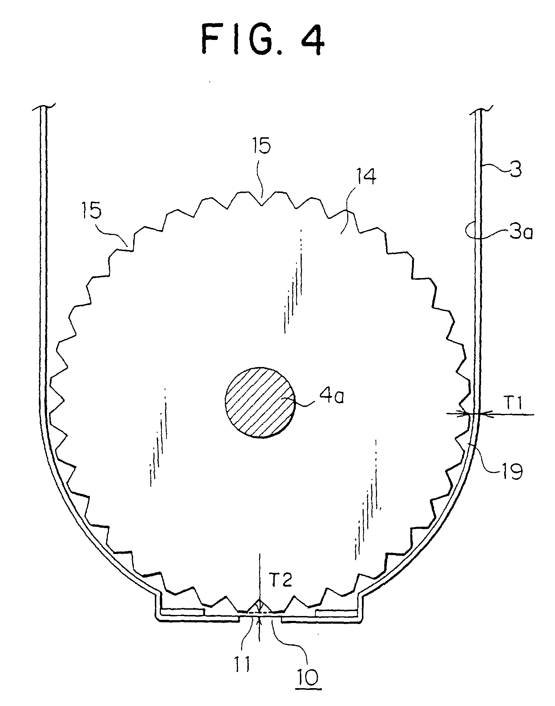

Figs. 3 and 4 show alternative drums which can replace the drum 4 of Figs. 1 and 2. The difference between the drum 12 of Fig. 3 and the drum 4 of Figs. 1 and 2 is that the drum 12 is formed with channels 13 each of which has a semicircular cross section, instead of the arcuate channels 41 of Fig. 1. The channels 15 of the drum 14 of Fig. 4 have a substantially V-shaped cross section, instead of the arcuate channels 41 of Fig. 1. It is recognized that the channels may have various forms suitable for holding the flour, and are not limited to arcuate, semicircular, or V-shaped forms.

In general, the occurrence of bridging in the hopper 3 is dependent on the characteristics and condition of the powder material used. For example, sometimes where the powder material contains moisture or oil due to its having been recycled, it is more likely that bridging will occur than with the use of pure powder material.

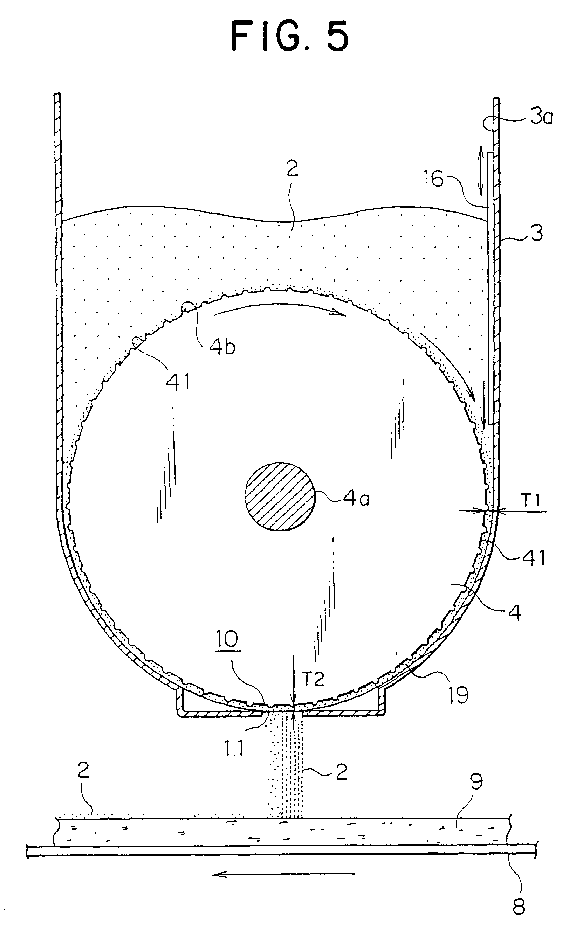

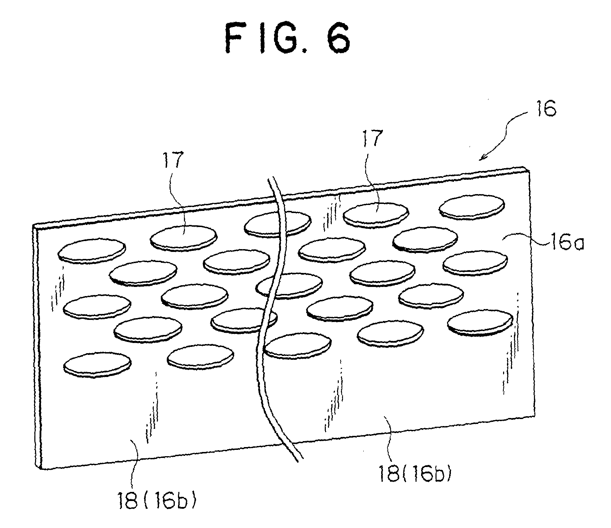

Figs. 5 and 6 show an embodiment of the invention, which is particularly adapted to reduce the likelihood of bridging and to thus improve the supply of the flour 2 to the passageway 19, as compared with the first embodiment. In this embodiment a movable plate 16 of a predetermined thickness is mounted above the entrance of the passageway 19. The plate 16 is arranged to bear on the inner wall 3a of the hopper 3, and is slidably supported by a driving mechanism (not shown) fixed to the plate 16, so that the plate can slide up and down along the inner wall 3a.

As shown in Fig. 6, an upper portion 16a of the plate 16 is provided with a plurality of holes. It is understood that the upper portion 16a can be perforated, or can have cutouts. In this embodiment, the upper portion 16a is provided with elliptic apertures 17, which are arranged in an alternating pattern whereby the flour 2 in the hopper 3 is adapted to flow into the apertures 17. Each aperture 17 is spaced apart from the adjacent apertures 17 by desired distances. A lower portion 16b of the plate 16 is a solid body. This lower portion is not provided with openings, so that it forms flat surfaces 18.

When the plate 16 is energized by the driving mechanism, the plate slides up and down along the inner wall 3a of the hopper 3 so as to move toward and away from the entrance of the passageway 19. This movement stirs the flour 2 within the hopper, and the flour is further stirred by the holes in the upper portion 16a of the plate, thereby decreasing the possibility of bridging. During this movement, the flour is urged into the entrance by the flat surface 18 on the lower portion 16b of the plate 16, thereby establishing a suitable feed of the flour 2 from within the hopper 3 to the opening 10.

The configuration of the movable plate 16 is not limited to that shown, but may be changed to other suitable configurations. For example, it is also possible to provide a movable plate which has the holes over substantially the entire height of the plate, in order to minimize the possibility of the bridging. This movable plate is so located that its sliding motion does not interfere with the guiding of the flour 2 by the rotation of the drum 4.

As an alternative, the upper portion 16a of the movable plate 16 can have a rough surface. For example it can have protrusions and recesses that mechanically enable flour to cling to the rotation surface 4b of the drum 4.

From the above description, it will be apparent that the invention disclosed herein provides an advantageous sprinkling method and apparatus for sprinkling food products with powder material. The foregoing discussion merely discloses and describes exemplary embodiments of the present invention. As will be understood by those familiar with the art, the invention may be embodied in other specific forms without departing from the scope of the invention as defined by the claims. For example, the food product is not limited to bread dough sheets, but may be other products such as dough pieces of specific forms, and cakes. Furthermore, the powder material is not limited to flour, but may be other materials such as wheat protein powder, spice powders and other powdered food additives. Still further, the movable plate can be suitably designed for the kind of powder material to be used.

## Claims

1. Apparatus for sprinkling a food product (9) with powder material (2), comprising:
hopper means (3) for holding powder material in a space defined by an inner wall (3a) of said hopper means, said hopper means having an exit opening (10) at the bottom thereof;
a rotary member (4) rotatably mounted within said hopper means, said rotary member having a rotation surface (4b) provided with recesses (41) for receiving the powder material; and
a narrow passageway (19) provided between said rotation surface (4b) of said rotary member (4) and said inner wall (3a) of said hopper (3) for pressing the powder material within said hopper means against said rotation surface of said rotary member;
means (11) for wiping the compressed powder material from said rotation surface of said rotary member at said exit opening of said hopper means, and for causing the wiped powder material to exit through said exit opening; **characterised by**
a movable plate (16) slidably supported on said inner wall (3a) of said hopper means (3) above said narrow passageway (19), said movable plate being arranged to stir the powder material (2) within said hopper means and to feed the powder material into the said passageway by its sliding movement,
wherein said movable plate has a surface having a plurality of through holes (17) opening on the inner wall (3a) of the hopper, or said movable plate has a rough surface, for stirring the powder material so as to break up bridges;
means (8) for conveying a food product, said conveying means having a surface (8a) on which the food product may be located; and
said hopper means being located above said conveying means.

2. Apparatus as claimed in claim 1, wherein said wiping means (11) is a wire mesh.

3. Apparatus as claimed in claim 1, wherein said wiping means (11) is a woven material.

4. Apparatus as claimed in claim 1, 2 or 3, wherein said movable plate (16) has a flat surface (18) for feeding the powder material (2) into said narrow passageway (19).

5. A method of sprinkling a food product (9) with powder material (2), comprising the steps of:
supplying the powder material into a hopper means (3) provided with an exit opening (10) at the bottom thereof,
introducing the powder material into recesses provided on a rotation surface (4b) of a rotating member (4) ;
introducing the powder material into a narrow passageway (19) between said rotation surface (45) of said rotary member (4) and said inner wall (3a) of said hopper (3) and thereby pressing the powder material within said hopper means against said rotation surface of said rotating member;
wiping the compressed powder material from said rotation surface of said rotating member at said exit opening of said hopper means, thereby causing the wiped powder material to exit through said exit opening; and
**characterised by** the provision of a movable plate (16) slidably supported on said inner wall (3a) of said hopper means (3) above said narrow passageway (19), said movable plate being arranged to stir the powder material (2) within said hopper means and to feed the powder material into the said passageway by its sliding movement,
wherein said movable plate has a surface having a plurality of through holes opening on the inner wall of the hopper, or said movable plate has a rough surface, for stirring the powder material so as to break up bridges.

## Patentansprüche

1. Vorrichtung zum Bestäuben eines Nahrungsmittelsprodukts (9) mit einer pulverigen Substanz (2), mit:
einem Trichter (3) zur Halterung einer pulverigen Substanz in einem durch eine Innenwand (3a) des Trichters definierten Raum, wobei der Trichter an seinem Boden eine Auslaßöffnung (10) aufweist,
einem innerhalb des Trichters drehbar angebrachten Rotationselement (4), wobei das Rotationselement eine mit Eintiefungen (41) für die Aufnahme von pulveriger Substanz versehene Rotationsfläche (4b) aufweist,
einen zwischen der Rotationsfläche (4b) des Rotationselements (4) und der Innenwand (3a) des Trichters (3) vorgesehenen schmalen Durchlaß (19), um die pulverige Substanz innerhalb des Trichters gegen die Rotationsfläche des Rotationselements zu drücken,
einem Abstreifer (11) an der Auslaßöffnung des Trichters zum Abstreifen der komprimierten pulverigen Substanz von der Rotationsfläche des Rotationselements, sowie dafür, die abgestreifte pulverige Substanz zum Austritt aus der Auslaßöffnung zu veranlassen, **gekennzeichnet durch** eine bewegliche Platte (16), die oberhalb des schmalen Durchlasses (19) auf der Innenwand (3a) des Trichters (3) abgestützt ist, wobei die bewegliche Platte derart angeordnet ist, daß sie die pulverige Substanz (2) innerhalb des Trichters aufrührt und **durch** ihre Gleitbewegung die pulverige Substanz in den Durchlaß speist, wobei die bewegliche Platte eine Oberfläche aufweist, die eine Mehrzahl von Durchgangslöchern (17) besitzt, die auf der Innenwand (3a) des Trichters öffnen, oder die bewegliche Platte eine rauhe Oberfläche besitzt, um die pulverige Substanz aufzurühren, derart, daß Substanzbrücken aufgebrochen werden,
einer Einrichtung zum Fördern des Nahrungsmittelprodukts, die eine Oberfläche (8a) aufweist, auf der das Nahrungsmittelprodukt angeordnet werden kann, und
wobei der Trichter oberhalb der Fördereinrichtung angeordnet ist.

2. Vorrichtung nach Anspruch 1, bei welcher der Abstreifer (11) ein Drahtnetz ist.

3. Vorrichtung nach Anspruchl, bei welcher der Abstreifer (11) ein gewebtes Material ist.

4. Vorrichtung nach Anspruch 1, 2 oder 3, bei welcher die bewegliche Platte (16) eine flache Oberfläche (18) aufweist, um die pulverige Substanz (2) in den schmalen Durchlaß (19) einzuspeisen.

5. Verfahren zum Bestäuben eines Nahrungsmittelproduktes (9) mit einer pulverigen Substanz (2), mit den folgenden Schritten:
Einfüllen der pulverigen Substanz in einen am Boden mit einer Auslaßöffnung (10) versehenen Trichter,
Einführen der pulverigen Substanz in Eintiefungen, die auf einer Rotationsfläche (4b) eines Rotationselements (4) vorgesehen sind,
Einführen der pulverigen Substanz in einen schmalen Durchlaß (19) zwischen der Rotationsfläche (45) des Rotationselements (4) und der Innenwand (3a) des Trichters (3) und dadurch Pressung der pulverigen Substanz innerhalb des Trichters gegen die Rotationsfläche des Rotationselements,
Abstreifen der komprimierten pulverigen Substanz von der Rotationsfläche des Rotationselements an der Auslaßöffnung des Trichters, wodurch die abgestreifte pulverige Substanz zum Austritt aus der Auslaßöffnung veranlaßt wird,
**gekennzeichnet durch**
das Vorsehen einer beweglichen Platte (16), die oberhalb des schmalen Durchlasses (19) gleitbar an der Innenwand (3a) des Trichters abgestützt ist, wobei die bewegliche Platte derart angeordnet ist, daß sie die pulverige Substanz (2) innerhalb des Trichters aufrühren und **durch** ihre Gleitbewegung in den Durchlaß speisen kann, und
wobei die bewegliche Platte eine Oberfläche besitzt, die eine Mehrzahl von auf der Innenwand des Trichters öffnenden Durchgangslöchern aufweist, oder die bewegliche Platte eine rauhe Oberfläche besitzt, um die pulverige Substanz zwecks Aufbrechens von Substanzbrücken aufzurühren.

## Revendications

1. Appareil pour saupoudrer un produit alimentaire (9) d'une matière en poudre (2), comportant :
un moyen formant trémie (3) pour contenir de la matière en poudre dans un espace défini par une paroi interne (3a) dudit moyen formant trémie, le fond dudit moyen formant trémie étant doté d'une ouverture de sortie (10) ;
un élément rotatif (4) monté à rotation à l'intérieur dudit moyen formant trémie, ledit élément rotatif ayant une surface de rotation (4b) dotée d'évidements (41) destinés à recevoir la matière en poudre ; et
un passage étroit (19) prévu entre ladite surface de rotation (4b) dudit élément rotatif (4) et ladite paroi interne (3a) de ladite trémie (3) pour comprimer la matière en poudre se trouvant dans ledit moyen formant trémie contre ladite surface de rotation dudit élément rotatif ;
un moyen (11) pour essuyer la matière en poudre comprimée de ladite surface de rotation dudit élément rotatif au niveau de ladite ouverture de sortie dudit moyen formant trémie, et pour faire sortir la matière en poudre essuyée à travers ladite ouverture de sortie ;
**caractérisé par** :
une plaque mobile (16) supportée à coulissement sur ladite paroi interne (3a) dudit moyen formant trémie (3) au-dessus dudit passage étroit (19), ladite plaque mobile étant agencée pour agiter la matière en poudre (2) se trouvant dans ledit moyen formant trémie et acheminer la matière en poudre jusque dans ledit passage grâce à son mouvement de coulissement ;
dans lequel ladite plaque mobile a une surface présentant une pluralité de trous traversants (17) débouchant sur la paroi interne (3a) de la trémie, ou ladite plaque mobile a une surface rugueuse, pour agiter la matière en poudre de façon à désagréger les ponts ;
un moyen (8) pour transporter un produit alimentaire, ledit moyen de transport ayant une surface (8a) sur laquelle le produit alimentaire peut être placé ; et
ledit moyen formant trémie étant situé au-dessus dudit moyen de transport.

2. Appareil selon la revendication 1, dans lequel ledit moyen d'essuyage (11) est constitué d'un treillis métallique.

3. Appareil selon la revendication 1, dans lequel ledit moyen d'essuyage (11) est constitué d'un tissu.

4. Appareil selon la revendication 1, 2 ou 3, dans lequel ladite plaque mobile (16) a une surface plate (18) pour acheminer la matière en poudre (2) jusque dans ledit passage étroit (19).

5. Procédé de saupoudrage d'un produit alimentaire (9) avec une matière en poudre (2), comportant les étapes consistant :
à fournir la matière en poudre à un moyen formant trémie (3) dont le fond est doté d'une ouverture de sortie (10) ;
à introduire la matière en poudre dans des évidements prévus sur une surface de rotation (4b) d'un élément rotatif (4) ;
à introduire la matière en poudre dans un passage étroit (19) compris entre ladite surface de rotation (45) dudit élément rotatif (4) et ladite paroi interne (3a) de ladite trémie (3) et à comprimer ainsi la matière en poudre se trouvant dans ledit moyen formant trémie contre ladite surface de rotation dudit élément rotatif ;
à essuyer la matière en poudre comprimée de ladite surface de rotation dudit élément rotatif au niveau de ladite ouverture de sortie dudit moyen formant trémie, en faisant ainsi sortir la matière en poudre essuyée à travers ladite ouverture de sortie ; et **caractérisé en ce qu'**il est prévu une plaque mobile (16) supportée à coulissement sur ladite paroi interne (3a) dudit moyen formant trémie (3) au-dessus dudit passage étroit (19), ladite plaque mobile étant agencée pour agiter la matière en poudre (2) à l'intérieur dudit moyen formant trémie et acheminer la matière en poudre jusque dans ledit passage grâce à son mouvement de coulissement ;
dans lequel ladite plaque mobile a une surface présentant une pluralité de trous traversants débouchant sur la paroi interne de la trémie, ou ladite plaque mobile a une surface rugueuse, pour agiter la matière en poudre de façon à désagréger les ponts.
